# EUROPEAN PATENT APPLICATION

(11) **EP 2 573 971 A1**
(43) Date of publication of application: **27.03.2013**
(21) Application number: 12193033.3
(22) Date of filing: 07.05.2008
(51) Int. Cl.: H04L 1/16

(54) **Method and apparatus for providing piggybacked positive acknowledgement/negative acknowledgement field indicator and a polling indicator**

(30) Priority: 08.05.2007 US 916691 P
(62) Divisional of application: 08747729.5
(71) Applicant: INTERDIGITAL TECHNOLOGY CORPORATION, Wilmington, DE 19810 (US)
(72) Inventor: Chitrapu, Prabhakar, R., Blue Bell, PA 19422 (US); Aghili, Behrouz, Commack, NY 11725 (US); Rudolf, Marian, F-35500 Vitre (FR); Dick, Stephen G., Nesconset, NY 11767 (US)
(74) Representative: Johansson, Magnus

(57) **Abstract**

A method and apparatus of providing a piggybacked positive acknowledgement/negative acknowledgement (ACKINACK) (PAN) field indicator (PANI) and a polling indicator are disclosed. A combined field of a PANI bit, a relative reserved block period (RRBP) bit and an EGPRS supplementary polling (ESIP) field may indicate a polling scheme and a presence of a PAN field. Alternatively, the presence of the PAN field in the data block may be indicated by using a specific training sequence. Alternatively, a forward error correction (FEC) coding may be performed on the data block including the header, and the presence of the PAN field may be indicated by scrambling the encoded bits corresponding the header with a specific scrambling sequence. Alternatively, a header check sequence (HCS) may be generated and the presence of the PAN field is indicated by mixing a predetermined sequence with the HCS.

## Description

FIELD OF INVENTION

This application is related to wireless communications.

BACKGROUND

Latency reduction is one of the considerations in a GSM/EDGE radio access network (GERAN). Two techniques have been proposed for the latency reduction: reduced transmission time interval (RTTI) and fast acknowledgement/non-acknowledgement (ACK/NACK) reporting (FANR).

Under current GERAN protocols, the network may obtain feedback data, (i.e., ACK/NACK of downlink data packets), from the mobile station through polling. The polling is indicated by an evolved general packet radio service (EGPRS) supplementary polling (ES/P) field. Two (2) ES/P bits indicate whether a relative reserved block period (RRBP) field is valid or not and what fields the next uplink control block shall contain.

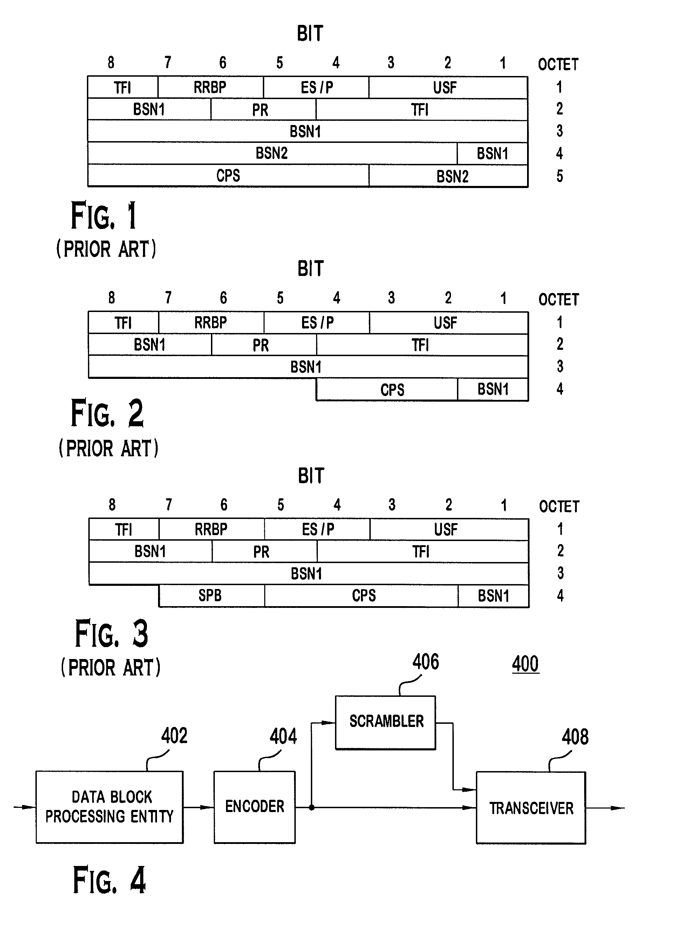

Figures 1-3 show conventional EGPRS downlink radio link control/medium access control (RLC/MAC) header types 1, 2, and 3, respectively. Both the ES/P field and the RRBP field are present in all three RLC/MAC header types. Table 1 shows the meaning of the conventional 2-bit ES/P field.

**Table 1**

| bits 54 | ES/P |
|---|---|
| 00 | RRBP field is not valid (no Polling) |
| 01 | RRBP field is valid - Extended Ack/Nack bitmap type FPB |
| 10 | RRBP field is valid - Piggy-backed Ack/Nack bitmap type FPB |
| 11 | RRBP field is valid - Extended Ack/Nack bitmap type NPB, measurement report included |

Conventionally, an ACK/NACK report is sent in an explicit message, also referred to as an RLC/MAC control block. The ACK/NACK report is addressed to a particular radio resource, called a Temporary Block Flow (TBF). A TBF is a temporal connection between a mobile station and a network to support a uni-directional transfer of data. A TBF is temporary and is maintained only for the duration of the data transfer.

It has been proposed that the ACK/NACK feedback for a certain TBF be "piggybacked" on an RLC/MAC data block that may be addressed to another TBF. The field that carries this ACK/NACK feedback is referred to as "piggybacked ACK/NACK (PAN) field". The presence or absence of the PAN field in the RLC/MAC data block is indicated by a PAN indicator (PANI).

In order to send the PANI, an extra bit may be included in a downlink data packet header as shown in Figures 1-3. However, currently there is no available space in the downlink data packet header. It has been proposed to split the conventional 2-bit RRBP field such that one bit is used for the RRBP field and the other bit is used for the PANI. Tables 2 and 3 show the meaning of the 1-bit RRBP field and 1-bit PANI field.

**Table 2**

| Bit | Full-rate PDCH uplink block with TDMA frame number |
|---|---|
| 0 | (N+8 or N+9) mod 2715648 |
| 1 | (N+13) mod 2715648 |

**Table 3**

| bit | PANI |
|---|---|
| 0 | A PAN field is not included |
| 1 | A PAN field is included |

In accordance with this proposal, the header size remains the same. However, there is redundancy in bit combinations. If the ES/P bits are "00", (i.e., when there is no polling request), the combinations of the RRBP bit and the PANI bit include wastage of three (3) combinations. Therefore, it would be desirable to provide a scheme for more efficient signaling of a PANI, an RRBP, and a polling indicator.

SUMMARY

A method and apparatus of providing a PANI and a polling indicator are disclosed. A combined field of a PANI bit, an RRBP bit, and an ES/P field may indicate a polling scheme and a presence of a PAN field. Alternatively, the presence of the PAN field in the data block may be indicated by using a specific training sequence. Alternatively, a forward error correction (FEC) coding may be performed on the data block including the header, and the presence of the PAN field may be indicated by scrambling the encoded bits corresponding the header with a specific scrambling sequence. Alternatively, a header check sequence (HCS) may be generated and the presence of the PAN field is indicated by mixing a predetermined sequence with the HCS. Block sequence number 2 (BSN2) bits may be used to indicate the existence of a PAN field.

BRIEF DESCRIPTION OF THE DRAWINGS

A more detailed understanding may be had from the following description, given by way of example in conjunction with the accompanying drawings wherein:

Figures 1-3 show conventional EGPRS downlink RLC/MAC header types 1, 2, and 3, respectively;

Figure 4 is a block diagram of a base station in accordance with the third embodiment;

Figure 5 is a block diagram of a WTRU in accordance with the third embodiment;

Figure 6 is a block diagram of a base station in accordance with the fourth embodiment; and

Figure 7 is a block diagram of a WTRU in accordance with the fourth embodiment.

DETAILED DESCRIPTION

When referred to hereafter, the terminology "wireless transmit/receive unit (WTRU)" includes but is not limited to a user equipment (UE), a mobile station, a fixed or mobile subscriber unit, a pager, a cellular telephone, a personal digital assistant (PDA), a computer, or any other type of user device capable of operating in a wireless environment. When referred to hereafter, the terminology "base station" includes but is not limited to a Node-B, a site controller, an access point (AP), or any other type of interfacing device capable of operating in a wireless environment.

In accordance with a first embodiment, a 1-bit PANI field, a 1-bit RRBP field, and a 2-bit ES/P field in an RLC/MAC header are combined together to indicate a polling scheme and an existence of a PAN field in the data block. The bit combinations of the PANI field, the RRBP field and the ES/P field do not have any redundancy. Example PANI, RRBP and ES/P bit combinations and their meaning are shown in Table 4.

In Table 4, the first bit, read from left, is a PANI field, the second bit is an RRBP field, and the third and fourth bits are an ES/P field. When the first bit, (i.e., the PANI field), is set to '1', it indicates that a PAN field is included in the data block, and if the first bit is set to '0', it indicates that a PAN field is not included in the data block. It should be noted that the bit combinations in Table 4 are provided as an example, not as a limitation, and any other combination may be used and any other meaning may be associated with the bit combinations.

**Table 4**

| PANI + RRBP + ES/P | | | | Meaning |
|---|---|---|---|---|
| 0 | 0 | 0 | 0 | No Polling; No PAN |
| 0 | 1 | 0 | 0 | Polling (FPB bitmap; N+M); No PAN |
| 1 | 0 | 0 | 0 | Polling (FPB bitmap as UL-PAN; N+M); PAN |
| 1 | 1 | 0 | 0 | No Polling PAN |
| 0 | 0 | 0 | 1 | Polling (FPB bitmap; N+8 or N+9); No PAN |
| 0 | 1 | 0 | 1 | Polling (FPB bitmap; N+13); No PAN |
| 1 | 0 | 0 | 1 | Polling (FPB bitmap; N+8 or N+9); PAN |
| 1 | 1 | 0 | 1 | Polling (FPB bitmap; N+13); PAN |
| 0 | 0 | 1 | 0 | Polling (FPB bitmap as UL-PAN; N+8 or N+9); No PAN |
| 0 | 1 | 1 | 0 | polling (FPB bitmap as UL-PAN; N+13); No PAN |
| 1 | 0 | 1 | 0 | Polling (FPB bitmap as UL-PAN; N+8 or N+9); PAN |
| 1 | 1 | 1 | 0 | Polling (FPB bitmap as UL-PAN; N+13); PAN |
| 0 | 0 | 1 | 1 | Polling (CQR - NPB bitmap; N+8 or N+9); No PAN |
| 0 | 1 | 1 | 1 | Polling (CQR - NPB bitmap; N+13); No PAN |
| 1 | 0 | 1 | 1 | Polling (CQR - NPB bitmap; N+8 or N+9); PAN |
| 1 | 1 | 1 | 1 | Polling (CQR - NPB bitmap; N+13); PAN |

For example, the bit combinations 0100 and 1000 may be used to specify additional polling schemes, (e.g., those eliminated in reducing the conventional RRBP bits from 2 to 1), or to demand reporting of channel quality report (CQR) or next partial bitmap (NPB) when there is not enough space to send both. The parameter M may be chosen suitably.

In accordance with a second embodiment, a training sequence is used to indicate the presence of the PAN field in the RLC/MAC data block. Under the current GERAN specification, one of eight (8) training sequences is used for communication between a WTRU and a network in a cell. In accordance with the second embodiment, eight (8) training sequence groups are defined with each group having two (2) training sequences. One training sequence is used in a cell for all communications between the WTRU and the network and the presence of a PAN field in the RLC/MAC data block is indicated by using the other training sequence in that training sequence group.

In accordance with a third embodiment, a scrambling code is used to indicate the presence of the PAN field in the RLC/MAC data block. Figure 4 is a block diagram of a base station 400 in accordance with the third embodiment. The base station 400 includes a data block processing entity 402, an encoder 404, a scrambler 406, and a transceiver 408. The data block processing entity 402 generates a data block including a header. The header includes the ES/P field and the RRBP field. The encoder 404 performs an FEC coding on the data block including the header. If the data block does not include a PAN field, the data block is transmitted by the transceiver 408 as in the prior art. If the data block includes a PAN field, the scrambler 406 scrambles the encoded bits corresponding to the header with a scrambling sequence and the data block including the scrambled bits are transmitted by the transceiver 408.

For scrambling, the encoded bits are modulo-2 added to a prespecified scrambling sequence. The length of the scrambling sequence may be same to that of the encoded bits corresponding to the header. The scrambling sequence is unique and known to both the base station and the WTRU. The scrambling code may be generated in a number of ways, or selected in accordance with criterion that the distance between the scrambling code and the all "zero" sequence is maximized.

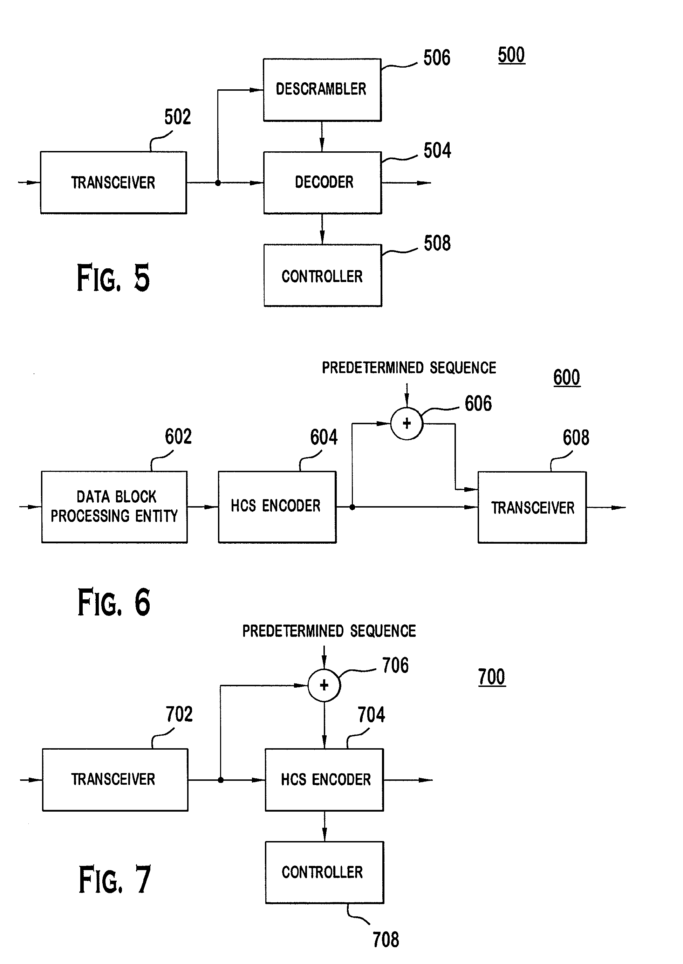

Figure 5 is a block diagram of a WTRU 500 in accordance with the third embodiment. The WTRU 500 includes a transceiver 502, a decoder 504, a descrambler 506, and a controller 508. The transceiver 502 receives a bit sequence of a data block from the base station 400. The decoder 504 performs FEC decoding on the received bit sequence as in the prior art. If the data block does not include a PAN field and therefore the bits corresponding to the header was not scrambled at the base station 400, the decoder 504 may succeed in decoding. However, if the data block includes a PAN field and therefore the bits corresponding to the header was scrambled at the base station 400, the received bit sequence will be rejected due to having too many bit errors. If the received bit sequence is rejected, the received bits corresponding to the header are descrambled, (i.e., moculo-2 added with the scrambling sequence), by the descrambler 506. The received bit sequence with the descrambled header portion of the bit sequence is then decoded again by the decoder 504. If the second FEC decoding is successful, the controller 508 detects that a PAN field is included in the data block.

In accordance with a fourth embodiment, a modified HCS is used to indicate the presence of the PAN field. A radio block for data transfer includes one RLC/MAC header, an HCS, one or more RLC data block(s), and a block check sequence (BCS). The data block may include a PAN field and an optional PAC check sequence (PCS). The HCS is used for error detection of the RLC/MAC header. The HCS may be eight bits long.

Figure 6 is a block diagram of a base station 600 in accordance with the fourth embodiment. The base station 600 includes a data block processing entity 602, a HCS encoder 604, a modulo-2 adder 606, and a transceiver 608. The data block processing unit 602 generates a data block including a header. The header includes an ES/P field and an RRBP field. The HCS encoder 604 generates an HCS. If the radio block does not include a PAN field, the radio block is transmitted by the transceiver 608 as in the prior art. If the radio block includes a PAN field, the modulo-2 adder 606 adds a predetermined sequence to the HCS, and the radio block with the modified HCS is transmitted by the transceiver 608. For example, a sequence 11111111 may be used as the predetermined sequence. In this case, the HCS bits are inverted.

Figure 7 is a block diagram of a WTRU 700 in accordance with the fourth embodiment. The WTRU 700 includes a transceiver 702, an HCS decoder 704, a modulo-2 adder 706, and a controller 708. The transceiver 702 receives a data block from the base station 600. The HCS decoder 704 performing HCS decoding with the received header of the data block and the received HCS. If the header is received error free, (i.e., the HCS check passes), the controller 708 may assume that no PAN is present in the RLC/MAC data block. If the HCS check fails, the received header is modulo-2 added with the predetermined sequence by the modulo-2 adder 706, and HCS check is performed again. If the second HSC check passes, the controller 708 may assume that the header is correct and the PAN field is included in the RLC/MAC data block.

In accordance with a fifth embodiment, the existence of a PAN field may be signaled using block sequence numbers (BSNs). Currently, the header includes an 11 bit BSN1 and a 10 bit BSN2. Once the BSN1 is specified, BSN2 is forced to be within a certain vicinity of BSN1. The vicinity is specified by a window size (WS). Conventionally, a WS of 10 bits is adequate. In accordance with the fifth embodiment, the current WS is halved so that only 9 bits are needed to signal BSN2. The unused tenth BSN2 bit in the header may be used to indicate a PANI.

Embodiments.

1. A method of providing a PANI and a polling indicator.

2. The method of embodiment 1 comprising setting a combined field comprising a PANI bit, an RRBP bit and an ES/P field to indicate a polling scheme and an existence of a PAN field in a data block.

3. The method of embodiment 2 comprising sending the data block including the combined field.

4. A method of detecting a PANI and a polling indicator.

5. The method of embodiment 4 comprising receiving a data block, the data block including a combined field of a PANI bit, an RRBP bit and an ES/P field.

6. The method of embodiment 5 comprising determining a polling scheme and an existence of a PAN field in the data block based on the combined field.

7. The method of embodiment 1 comprising generating a data block including a polling indicator.

8. The method of embodiment 7 comprising sending the data block along with a training sequence reserved for indicating a presence of a PAN field in the data block.

9. The method of embodiment 8 wherein the training sequence is one of two training sequences used in a cell.

10. The method of embodiment 4 comprising receiving a training sequence and a data block including the polling indicator.

11. The method of embodiment 10 comprising detecting that the data block includes a PAN field if the training sequence is one reserved for indicating a presence of a PAN field in the data block.

12. The method as in any one of embodiments 10-11 wherein the training sequence is one of two training sequences used in a cell.

13. The method of embodiment 1 comprising generating a data block including a header, the header including the polling indicator.

14. The method of embodiment 13 comprising performing an FEC coding on the data block including the header.

15. The method of embodiment 14 comprising scrambling encoded bits corresponding to the header with a scrambling sequence if the data block includes a PAN field.

16. The method of embodiment 4 comprising receiving encoded bits of a data block.

17. The method of embodiment 16 comprising performing an FEC decoding on the received encoded bits.

18. The method of embodiment 17 comprising if FEC decoding fails, descrambling the received encoded bits with a scrambling code.

19. The method of embodiment 18 comprising performing an FEC decoding on the descrambled bits.

20. The method of embodiment 19 comprising if FEC decoding on the descrambled bits succeeds, detecting that a PAN field is included in the data block.

21. The method of embodiment 1 comprising generating a data block including a header, the header including the polling indicator.

22. The method of embodiment 21 comprising generating an HCS.

23. The method of embodiment 22 comprising mixing a predetermined sequence with the HCS if a PAN field is included in the data block.

24. The method of embodiment 23 comprising sending the data block.

25. The method of embodiment 4 comprising receiving a data block.

26. The method of embodiment 25 comprising performing HCS decoding with a header of the data block and a HCS included in the data block.

27. The method of embodiment 26 comprising if HCS fails, mixing a predetermined sequence with the HCS.

28. The method of embodiment 27 comprising performing second HCS decoding with the header and a mixed HCS.

29. The method of embodiment 28 comprising detecting that the data block includes a PAN field if the second HCS decoding succeeds.

30. An apparatus configured to provide a PANI and a polling indicator.

31. The apparatus of embodiment 30 comprising a data block processing entity for setting a combined field comprising a PANI bit, an RRBP bit, and an ES/P field to indicate a polling scheme and an existence of a PAN field in a data block.

32. The apparatus of embodiment 31 comprising a transceiver for sending the data block including the combined field.

33. An apparatus of supporting a PANI and a polling indicator.

34. The apparatus of embodiment 33 comprising a transceiver for receiving a data block, the data block including a combined field of a PANI bit, an RRBP bit, and an ES/P field.

35. The apparatus of embodiment 34 comprising a controller for determining a polling scheme and an existence of a PAN field in the data block based on the combined field.

36. The apparatus of embodiment 30 comprising a data block processing entity for generating a data block including the polling indicator.

37. The apparatus of embodiment 36 comprising a transceiver for sending the data block along with a training sequence reserved for indicating a presence of a PAN field in the data block.

38. The apparatus of embodiment 37 wherein the training sequence is one of two training sequences used in a cell.

39. The apparatus of embodiment 33 comprising a transceiver for receiving a training sequence and a data block including the polling indicator.

40. The apparatus of embodiment 39 comprising a controller for detecting that the data block includes a PAN field if the training sequence is one reserved for indicating a presence of a PAN field in the data block.

41. The apparatus as in any one of embodiment 39-40, wherein the training sequence is one of two training sequences used in a cell.

42. The apparatus of embodiment 30 comprising a data block processing entity for generating a data block including a header, the header including the polling indicator.

43. The apparatus of embodiment 42 comprising an encoder for performing an FEC coding on the data block including the header.

44. The apparatus of embodiment 43 comprising a scrambler for scrambling encoded bits corresponding the header with a scrambling sequence if the data block includes a PAN field.

45. The apparatus of embodiment 44 comprising a transceiver for sending the data block including the scrambled bits.

46. The apparatus of embodiment 33 comprising a transceiver for receiving encoded bits of a data block.

47. The apparatus of embodiment 46 comprising a decoder for performing an FEC decoding on the received encoded bits.

48. The apparatus of embodiment 47 comprising a descrambler for descrambling the received encoded bits with a scrambling code if FEC decoding fails, the descrambled bits being decoded by the decoder.

49. The apparatus of embodiment 48 comprising a controller for detecting that a PAN field is included in the data block if FEC decoding on the descrambled bits succeeds.

50. The apparatus of embodiment 30 comprising a data block processing entity for generating a data block including a header, the header including the polling indicator.

51. The apparatus of embodiment 50 comprising an encoder for generating an HCS.

52. The apparatus of embodiment 51 comprising a modulo-2 adder for mixing a predetermined sequence with the HCS if a PAN field is included in the data block.

53. The apparatus of embodiment 52 comprising a transceiver for sending the data block.

54. The apparatus of embodiment 33 comprising a transceiver for receiving a data block.

55. The apparatus of embodiment 54 comprising a decoder for performing HCS decoding with a header of the data block and a HCS included in the data block.

56. The apparatus of embodiment 55 comprising a modulo-2 adder for mixing a predetermined sequence with the HCS if HCS fails, second HCS decoding being performed by the decoder with the header and a mixed HCS.

57. The apparatus of embodiment 56 comprising a controller for detecting that the data block includes a PAN field if the second HCS decoding succeeds.

58. A method of providing a PANI.

59. The method of embodiment 58 comprising generating a data block including a PAN field.

60. The method of embodiment 59 comprising setting one of BSN2 bits to indicate an existence of the PAN field in the data block.

61. The method of embodiment 60 comprising sending the data block.

62. A method of detecting a PANI.

63. The method of embodiment 62 comprising receiving a data block.

64. The method of embodiment 63 comprising detecting an existence of a PAN field in the data block based on one of BSN2 bits.

65. An apparatus of providing a PANI.

66. The apparatus of embodiment 65 comprising a data block processing entity for generating a data block including a PAN field, and setting one of BSN2 bits to indicate an existence of the PAN field in the data block.

67. The apparatus of embodiment 66 comprising a transceiver for sending the data block.

68. An apparatus of detecting a PANI.

69. The apparatus of embodiment 68 comprising a transceiver for receiving a data block.

70. The apparatus of embodiment 69 comprising a controller for detecting an existence of a PAN field in the data block based on one of BSN2 bits.

71. A method of providing a piggybacked positive acknowledgement/negative acknowledgement (ACK/NACK) (PAN) field indicator (PANI) and a polling indicator, the method comprising:
setting a combined field comprising a PANI bit, a relative reserved block period (RRBP) bit and an evolved general packet radio service (EGPRS) supplementary polling (ES/P) field to indicate a polling scheme and an existence of a PAN field in a data block; and
sending the data block including the combined field.

72. A method of detecting a piggybacked positive acknowledgement/negative acknowledgement (ACK/NACK) (PAN) field indicator (PANI) and a polling indicator, the method comprising:
receiving a data block, the data block including a combined field of a PANI bit, a relative reserved block period (RRBP) bit and an evolved general packet radio service (EGPRS) supplementary polling (ES/P) field; and
determining a polling scheme and an existence of a PAN field in the data block based on the combined field.

73. A method of providing a piggybacked positive acknowledgement/negative acknowledgement (ACK/NACK) (PAN) field indicator (PANI) and a polling indicator, the method comprising:
generating a data block including the polling indicator; and
sending the data block along with a training sequence reserved for indicating a presence of a PAN field in the data block.

74. The method of item 73 wherein the training sequence is one of two training sequences used in a cell.

75. A method of detecting a piggybacked positive acknowledgement/negative acknowledgement (ACK/NACK) (PAN) field indicator (PANI) and a polling indicator, the method comprising:
receiving a training sequence and a data block including the polling indicator; and
detecting that the data block includes a PAN field if the training sequence is one reserved for indicating a presence of a PAN field in the data block.

76. The method of item 75 wherein the training sequence is one of two training sequences used in a cell.

77. A method of providing a piggybacked positive acknowledgement/negative acknowledgement (ACK/NACK) (PAN) field indicator (PANI) and a polling indicator, the method comprising:
generating a data block including a header, the header including the polling indicator;
performing a forward error correction (FEC) coding on the data block including the header; and
scrambling encoded bits corresponding to the header with a scrambling sequence if the data block includes a PAN field.

78. A method of detecting a piggybacked positive acknowledgement/negative acknowledgement (ACK/NACK) (PAN) field indicator (PANI) and a polling indicator, the method comprising:
receiving encoded bits of a data block;
performing a forward error correction (FEC) decoding on the received encoded bits;
if FEC decoding fails, descrambling the received encoded bits with a scrambling code;
performing an FEC decoding on the descrambled bits; and
if FEC decoding on the descrambled bits succeeds, detecting that a PAN field is included in the data block.

79. A method of providing a piggybacked positive acknowledgement/negative acknowledgement (ACK/NACK) (PAN) field indicator (PANI) and a polling indicator, the method comprising:
generating a data block including a header, the header including the polling indicator;
generating a header checksum (HCS);
mixing a predetermined sequence with the HCS if a PAN field is included in the data block; and
sending the data block.

80. A method of detecting a piggybacked positive acknowledgement/negative acknowledgement (ACK/NACK) (PAN) field indicator (PANI) and a polling indicator, the method comprising:
receiving a data block;
performing header check sequence (HCS) decoding with a header of the data block and a HCS included in the data block;
if HCS fails, mixing a predetermined sequence with the HCS;
performing second HCS decoding with the header and a mixed HCS; and
detecting that the data block includes a PAN field if the second HCS decoding succeeds.

81. An apparatus configured to provide a piggybacked positive acknowledgement/negative acknowledgement (ACK/NACK) (PAN) field indicator (PANI) and a polling indicator, the apparatus comprising:
a data block processing entity for setting a combined field comprising a PANI bit, a relative reserved block period (RRBP) bit, and an evolved general packet radio service (EGPRS) supplementary polling (ES/P) field to indicate a polling scheme and an existence of a PAN field in a data block; and
a transceiver for sending the data block including the combined field.

82. An apparatus of supporting a piggybacked positive acknowledgement/negative acknowledgement (ACK/NACK) (PAN) field indicator (PANI) and a polling indicator, the apparatus comprising:
a transceiver for receiving a data block, the data block including a combined field of a PANI bit, a relative reserved block period (RRBP) bit, and an evolved general packet radio service (EGPRS) supplementary polling (ES/P) field; and
a controller for determining a polling scheme and an existence of a PAN field in the data block based on the combined field.

83. An apparatus of providing a piggybacked positive acknowledgement/negative acknowledgement (ACK/NACK) (PAN) field indicator (PANI) and a polling indicator, the apparatus comprising:
a data block processing entity for generating a data block including the polling indicator; and
a transceiver for sending the data block along with a training sequence reserved for indicating a presence of a PAN field in the data block.

84. The apparatus of item 83 wherein the training sequence is one of two training sequences used in a cell.

85. An apparatus of detecting a piggybacked positive acknowledgement/negative acknowledgement (ACK/NACK) (PAN) field indicator (PANI) and a polling indicator, the apparatus comprising:
a transceiver for receiving a training sequence and a data block including the polling indicator; and
a controller for detecting that the data block includes a PAN field if the training sequence is one reserved for indicating a presence of a PAN field in the data block.

86. The apparatus of item 85 wherein the training sequence is one of two training sequences used in a cell.

87. An apparatus of providing a piggybacked positive acknowledgement/negative acknowledgement (ACK/NACK) (PAN) field indicator (PANI) and a polling indicator, the apparatus comprising:
a data block processing entity for generating a data block including a header, the header including the polling indicator;
an encoder for performing a forward error correction (FEC) coding on the data block including the header;
a scrambler for scrambling encoded bits corresponding the header with a scrambling sequence if the data block includes a PAN field; and
a transceiver for sending the data block including the scrambled bits.

88. An apparatus of detecting a piggybacked positive acknowledgement/negative acknowledgement (ACK/NACK) (PAN) field indicator (PANI) and a polling indicator, the apparatus comprising:
a transceiver for receiving encoded bits of a data block;
a decoder for performing a forward error correction (FEC) decoding on the received encoded bits;
a descrambler for descrambling the received encoded bits with a scrambling code if FEC decoding fails, the descrambled bits being decoded by the decoder; and
a controller for detecting that a PAN field is included in the data block if FEC decoding on the descrambled bits succeeds.

89. An apparatus of providing a piggybacked positive acknowledgement/negative acknowledgement (ACK/NACK) (PAN) field indicator (PANI) and a polling indicator, the apparatus comprising:
a data block processing entity for generating a data block including a header, the header including the polling indicator;
an encoder for generating a header checksum (HCS);
a modulo-2 adder for mixing a predetermined sequence with the HCS if a PAN field is included in the data block; and
a transceiver for sending the data block.

90. An apparatus of detecting a piggybacked positive acknowledgement/negative acknowledgement (ACK/NACK) (PAN) field indicator (PANI) and a polling indicator, the apparatus comprising:
a transceiver for receiving a data block;
a decoder for performing header check sequence (HCS) decoding with a header of the data block and a HCS included in the data block;
a modulo-2 adder for mixing a predetermined sequence with the HCS if HCS fails, second HCS decoding being performed by the decoder with the header and a mixed HCS; and
a controller for detecting that the data block includes a PAN field if the second HCS decoding succeeds.

91. A method of providing a piggybacked positive acknowledgement/negative acknowledgement (ACK/NACK) (PAN) field indicator (PANI), the method comprising:
generating a data block including a PAN field;
setting one of block sequence number 2 (BSN2) bits to indicate an existence of the PAN field in the data block; and
sending the data block.

92. A method of detecting a piggybacked positive acknowledgement/negative acknowledgement (ACK/NACK) (PAN) field indicator (PANI), the method comprising:
receiving a data block; and
detecting an existence of a PAN field in the data block based on one of block sequence number 2 (BSN2) bits.

93. An apparatus of providing a piggybacked positive acknowledgement/negative acknowledgement (ACK/NACK) (PAN) field indicator (PANI), the apparatus comprising:
a data block processing entity for generating a data block including a PAN field, and setting one of block sequence number 2 (BSN2) bits to indicate an existence of the PAN field in the data block; and
a transceiver for sending the data block.

94. An apparatus of detecting a piggybacked positive acknowledgement/negative acknowledgement (ACK/NACK) (PAN) field indicator (PANI), the apparatus comprising:
a transceiver for receiving a data block; and
a controller for detecting an existence of a PAN field in the data block based on one of block sequence number 2 (BSN2) bits.

Although features and elements are described above in particular combinations, each feature or element can be used alone without the other features and elements or in various combinations with or without other features and elements. The methods or flow charts provided herein may be implemented in a computer program, software, or firmware incorporated in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) or Ultra Wide Band (UWB) module.

## Claims

1. A method for reporting a positive-acknowledgement/negative-acknowledgement (ACK/NACK) in response to a received data block, the method comprising:
receiving a data block including a header and a payload, wherein the header includes a sequence of bits for indicating both an ACK/NACK polling scheme and a presence or absence of a piggybacked ACK/NACK (PAN) field in the data block, and wherein each of a plurality of bit combinations of the sequence indicates a different combination of the ACK/NACK polling scheme and the presence or absence of the PAN field;
processing the PAN field on a condition that the sequence indicates the presence of the PAN field in the data block; and
sending feedback based on the ACK/NACK polling scheme indicated by the sequence.

2. The method of claim 1, wherein the sequence includes a first field for indicating the presence or absence of the PAN field.

3. The method of claim 2, wherein the sequence includes a second field for indicating the ACK/NACK polling scheme.

4. The method of claim 1, wherein the PAN field of the data block is addressed to a first wireless transmit/receive unit (WTRU) and the payload of the data block is addressed to a second WTRU.

5. The method of claim 1, wherein the data block is received via a GSM/EDGE radio access network (GERAN).

6. A wireless transmit/receive unit (WTRU) for reporting a positive-acknowledgement/negative-acknowledgement (ACK/NACK) in response to a received data block, the WTRU comprising:
a transceiver configured to receive a data block including a header and a payload, wherein the header includes a sequence of bits for indicating both an ACK/NACK polling scheme and a presence or absence of a piggybacked ACK/NACK (PAN) field in the data block, and wherein each of a plurality of bit combinations of the sequence indicates a different combination of the ACK/NACK polling scheme and the presence or absence of the PAN field; and
a controller configured to process the PAN field on a condition that the sequence indicates the presence of the PAN field in the data block, and send feedback based on the ACK/NACK polling scheme indicated by the sequence.

7. The WTRU of claim 6, wherein the sequence includes a first field for indicating the presence or absence of the PAN field.

8. The WTRU of claim 7, wherein the sequence includes a second field for indicating the ACK/NACK polling scheme.

9. The WTRU of claim 6, wherein the PAN field of the data block is addressed to a first wireless transmit/receive unit (WTRU) and the payload of the data block is addressed to a second WTRU.

10. The WTRU of claim 6, wherein the data block is received via a GSM/EDGE radio access network (GERAN).

11. A method for requesting a positive-acknowledgement/negative-acknowledgement (ACK/NACK) for a data block, the method comprising:
generating a data block including a header and a payload, wherein the header includes a sequence of bits for indicating both an ACK/NACK polling scheme and a presence or absence of a piggybacked ACK/NACK (PAN) field in the data block, and wherein each of a plurality of bit combinations of the sequence indicates a different combination of the ACK/NACK polling scheme and the presence or absence of the PAN field; and
transmitting the data block.

12. The method of claim 11, wherein the sequence includes a first field for indicating the presence or absence of the PAN field.

13. The method of claim 12, wherein the sequence includes a second field for indicating the ACK/NACK polling scheme.

14. The method of claim 11, wherein the PAN field of the data block is addressed to a first wireless transmit/receive unit (WTRU) and the payload of the data block is addressed to a second WTRU.

15. The method of claim 11, wherein the data block is transmitted via a GSM/EDGE radio access network (GERAN).

16. An apparatus for receiving a positive-acknowledgement/negative-acknowledgement (ACK/NACK) for a data block, the apparatus comprising:
a controller configured to generate a data block including a header and a payload, wherein the header includes a sequence of bits for indicating both an ACK/NACK polling scheme and a presence or absence of a piggybacked ACK/NACK (PAN) field in the data block, and wherein each of a plurality of bit combinations of the sequence indicates a different combination of the ACK/NACK polling scheme and the presence or absence of the PAN field; and
a transmitter configured to transmit the data block.

17. The apparatus of claim 16, wherein the sequence includes a first field for indicating the presence or absence of the PAN field.

18. The apparatus of claim 17, wherein the sequence includes a second field for indicating the ACK/NACK polling scheme.

19. The apparatus of claim 16, wherein the PAN field of the data block is addressed to a first wireless transmit/receive unit (WTRU) and the payload of the data block is addressed to a second WTRU.

20. The apparatus of claim 16, wherein the data block is transmitted via a GSM/EDGE radio access network (GERAN).
